(19) **Europäisches Patentamt / European Patent Office / Office européen des brevets**

(11) **EP 2 928 929 B1**

(12) **FASCICULE DE BREVET EUROPEEN**

(45) Date de publication et mention
de la délivrance du brevet:
**16.05.2018 Bulletin 2018/20**

(21) Numéro de dépôt: **13805315.2**

(22) Date de dépôt: **03.12.2013**

(51) Int Cl.:
***C08F 36/08*** *(2006.01)*

(86) Numéro de dépôt international:
**PCT/EP2013/075437**

(87) Numéro de publication internationale:
**WO 2014/086804 (12.06.2014 Gazette 2014/24)**

(54) **SYSTEME CATALYTIQUE MULTI-COMPOSANTS, SON PROCEDE DE PREPARATION ET PROCEDE DE POLYMERISATION DE L'ISOPRENE LE METTANT EN OEUVRE.**

MEHRKOMPONENTEN-KATALYSATORSYSTEM, VERFAHREN ZUR HERSTELLUNG DAVON UND ISOPRENPOLYMERISATIONSVERFAHREN DAMIT

MULTICOMPONENT CATALYTIC SYSTEM, PROCESS FOR PREPARING SAME AND ISOPRENE POLYMERIZATION PROCESS USING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2012 FR 1261576**

(43) Date de publication de la demande:
**14.10.2015 Bulletin 2015/42**

(73) Titulaire: **Compagnie Générale des Etablissements Michelin
63000 Clermont-Ferrand (FR)**

(72) Inventeur: **COURBES, Gaël
F-63040 Clermont-Ferrand Cedex 9 (FR)**

(74) Mandataire: **Le Cam, Véronique Marie Christine
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**EP-A1- 1 845 118      FR-A1- 2 939 801
GB-A- 2 101 616      US-A1- 2003 187 162**

## Description

La présente invention concerne un système catalytique à base d'un sel de terre rare particulièrement adapté à la polymérisation stéréospécifique 1,4-cis d'isoprène, ainsi qu'un procédé de synthèse de polyisoprène à fort taux de 1,4-cis mettant en oeuvre ce système catalytique.

La synthèse de polyisoprène à taux élevé de motifs 1,4-cis à l'échelle industrielle constitue un défi majeur pour l'industrie du pneumatique car ce sont des polymères qui, modifiés ou non, possèdent des caractéristiques similaires à celles du caoutchouc naturel.

La polymérisation en chaîne par catalyse de coordination constitue la principale chimie de préparation des polyisoprènes synthétiques à taux élevé de motifs 1,4-cis. On utilise généralement un système catalytique multi-composants à base d'un métal de terre rare constitué d'au moins :

- un sel d'un ou plusieurs métaux de terre rare d'un acide phosphorique organique ou d'un acide carboxylique organique,
- un solvant hydrocarboné, généralement du cyclohexane ou du méthylcyclohexane,
- un agent d'alkylation, généralement constitué d'un trialkylaluminium ou d'un hydrure de dialkylaluminium, et, le cas échéant,
- un monomère diène conjugué de préformation, essentiellement du butadiène, et / ou
- un donneur d'halogène.

De tels systèmes catalytiques sont décrits notamment dans les demandes de brevet internationales WO 02/38635, WO 02/38636, WO 03/097708, WO 02/48218 A1, WO 2006133757 A1 et WO 2007045417 A1 au nom des Demanderesses.

Le document US2003/187162 décrit un système catalytique préformé à base d'un carboxylate de néodyme, d'un alkyl aluminium, d'isoprène et d'un halogénure d'aluminium, pour la synthèse de polyisoprène dans un solvant organique, essentiellement l'hexane.

Le document GB 2 101 616 A décrit quant à lui un système catalytique composé du produit de la réaction d'un carboxylate de terre rare avec une base de Lewis, d'un alkylaluminium et d'un halogénure d'aluminium. La réaction préalable du carboxylate de terre rare avec une base de Lewis est effectuée dans un solvant de type hexane, cyclohexane, benzène ou toluène et garantit une bonne activité catalytique en vue d'une application industrielle.

Afin de diminuer les coûts de fabrication, il apparaît avantageux de réaliser la polymérisation d'isoprène en présence de solvant hydrocarboné aliphatique volatil. On entend par là, un solvant hydrocarboné aliphatique dont la température d'ébullition est inférieure à 40°C à pression atmosphérique. En effet, il en résulterait un procédé industriel moins coûteux en énergie car l'élimination du solvant volatil dans l'étape de récupération du polymère synthétisé est facilitée par son bas point d'ébullition.

Dans les procédés, généralement continus, utilisés sur les unités industrielles, le solvant de polymérisation est couramment récupéré en fin de synthèse pour être à nouveau utilisé en amont du procédé. Dans ce contexte, un inconvénient majeur des systèmes catalytiques les plus couramment utilisés pour synthétiser le polyisoprène est qu'ils sont préparés et dilués dans un solvant aliphatique hydrocarboné comportant au moins 6 atomes de carbone, tel que le cyclohexane ou le méthylcyclohexane comme décrit dans les documents WO 02/38635 ou WO 02/48218 A1. L'élimination de tels solvants, que nous désignerons comme « lourds » dans la suite du document, nécessite des températures d'extraction significatives, bien supérieures à la température d'ébullition du solvant volatil de polymérisation. En outre, selon le procédé industriel utilisé et sa configuration, l'utilisation d'un système catalytique préparé dans un solvant lourd conduirait à l'obtention d'un mélange de solvant lourd et de solvant volatil dans le procédé, puis généralement à l'accumulation du solvant lourd apporté par le catalyseur dans le solvant volatil de polymérisation. Il en résulterait une étape supplémentaire coûteuse de séparation des solvants volatil et lourd pour pouvoir continuer à réaliser la polymérisation dans le solvant volatil, selon l'avantage précité.

L'utilisation du butadiène comme monomère de préformation du système catalytique est largement répandue, y compris pour synthétiser le polyisoprène comme cela est décrit notamment dans les documents WO 02/38635 ou WO 02/48218 A1. Dans l'optique de polymériser l'isoprène dans un solvant aliphatique hydrocarboné volatil à l'échelle industrielle, les Demanderesses ont mis en évidence que les systèmes catalytiques préformés au butadiène, préparés selon les documents de brevets précités, ne sont pas solubles dans les solvants volatils, notamment dans les alcanes volatils qui sont les plus disponibles commercialement. Cette insolubilité favorise l'encrassement des installations industrielles utilisées pour la préparation du système catalytique multi-composants, ainsi que des lignes d'injection de catalyseur vers le réacteur de polymérisation, nécessitant des séquences coûteuses d'arrêt d'installation industrielle, de nettoyage et de redémarrage.

Il s'avère donc que la diminution des coûts de fabrication, par l'emploi d'un solvant volatil pour la polymérisation d'isoprène à l'échelle industrielle n'est pas garantie. En effet, les systèmes catalytiques couramment utilisés pour synthétiser le polyisoprène ne permettent pas de conserver l'avantage économique d'une synthèse en solvant volatil.

Un objectif de l'invention est de proposer un procédé de synthèse de polyisoprène à fort taux de motifs 1,4-cis, amélioré par rapport à ceux classiquement mis en oeuvre en diminuant notamment le coût de fonctionnement, qui soit adapté à une application industrielle.

Un autre objectif de la présente invention est de disposer d'un système catalytique particulièrement adapté à un tel procédé de synthèse conservant un niveau de stéréospécificité pour l'obtention de taux de motifs 1,4-cis élevés et une activité catalytique au moins équivalents aux systèmes catalytiques antérieurs..

Ces objectifs sont atteints en ce que l'Inventeur a mis au point un nouveau système catalytique multi-composants à base de terre rare particulièrement adapté à la synthèse de polyisoprène en solvant volatil à l'échelle industrielle. L'invention permet ainsi de proposer un procédé de synthèse de polyisoprène à fort taux de motifs 1,4-cis, présentant l'avantage économique procuré par l'utilisation de solvant de polymérisation volatil. L'utilisation du nouveau système catalytique dans le procédé de l'invention permet d'éviter l'encrassement des unités industrielles de fabrication du catalyseur et des lignes d'injection de catalyseur vers le réacteur de polymérisation. L'utilisation du nouveau système catalytique dans le procédé de l'invention permet également de réduire le coût énergétique du procédé.

La particularité de ce système catalytique est qu'il est préparé dans un solvant volatil dans lequel il est entièrement soluble. Son utilisation permet de réduire les coûts de production de manière significative en évitant selon certaines variantes toute étape supplémentaire de purification du solvant recyclé dans le procédé, ainsi que les coûts énergétiques en ne nécessitant pas de consommation excessive de vapeur lors de la récupération du polyisoprène. Il permet en outre de conserver une activité catalytique élevée, tout en préservant les caractéristiques essentielles de l'élastomère diénique synthétisé, notamment une stéréospécificité 1,4-cis élevée. Plus précisément, l'utilisation de ce système catalytique pour la polymérisation de l'isoprène permet la synthèse, avec une activité catalytique au moins équivalente à celle observée avec les systèmes catalytiques de l'art antérieur, de polyisoprènes présentant un taux d'enchaînements 1,4-cis d'au moins 96%.

Ainsi, un premier objet de l'invention est un système catalytique multi-composants à base au moins :

- d'isoprène, à titre de monomère de préformation,
- d'un sel d'un ou de plusieurs métaux de terre rare d'un acide phosphorique organique ou d'un acide carboxylique,
- d'un solvant hydrocarboné volatil inerte,
- d'un agent d'alkylation constitué d'une sélection de trialkylaluminium de formule $AlR_3$, dans laquelle R représente un radical alkyle, de préférence ayant de 1 à 10 atomes de carbone,
- d'un donneur d'halogène constitué d'un halogénure d'alkylaluminium ;

ce système catalytique comprenant le ou les métaux de terre rare selon une concentration égale ou supérieure à 0,005 mol/l.

Un autre objet de l'invention est un procédé de préparation dudit système catalytique multi-composants.

L'invention a également pour objet, un procédé de synthèse d'un polyisoprène à fort taux de motifs 1,4-cis par polymérisation en solvant volatil d'au moins l'isoprène en présence dudit système catalytique multi-composants.

Par l'expression « à base de » utilisée pour définir les constituants du système catalytique, on entend le mélange de ces constituants, ou le produit de la réaction d'une partie ou de la totalité de ces constituants

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Ainsi, un premier objet de l'invention est un système catalytique multi-composants à base au moins :

- d'isoprène, à titre de monomère de préformation,
- d'un sel métallique de terre rare d'un acide phosphorique organique, ou d'un sel métallique de terre rare d'un acide carboxylique ;
- d'un solvant hydrocarboné inerte saturé ou insaturé dont la température d'ébullition est inférieure à 40°C à pression atmosphérique ;
- d'un agent d'alkylation constitué d'un trialkylaluminium de formule $AlR_3$, dans laquelle R représente un radical alkyle ayant préférentiellement de 1 à 10 atomes de carbone, choisi parmi le triméthylaluminium, le triéthylaluminium, le tri-n-propylaluminium, le triisopropylaluminium, le tri-n-butylaluminium, le tri-t-butylaluminium,, le tri-n-pentylaluminium, le tri-n-hexylaluminium, le tri-n-octylaluminium, le tricyclohexylaluminium et
- d'un donneur d'halogène constitué d'un halogénure d'alkylaluminium, le radical alkyle ayant préférentiellement de 1 à 8 atomes ;

ce système catalytique comprenant le métal de terre rare selon une concentration égale ou supérieure à 0,005 mol/l.

Ainsi, un premier élément constitutif du système catalytique multi-composants selon l'invention est l'isoprène, à titre de monomère de préformation.

On notera que le rapport molaire (isoprène de préformation / sel de terre rare) peut présenter une valeur allant de 5 à 100, de préférence de 10 à 90 et encore plus préférentiellement de 15 à 70, voire de 25 à 50.

Un deuxième élément constitutif du système catalytique multi-composants selon l'invention est le sel métallique de terre(s) rare(s). On entend par métal de terre rare, tout élément de la famille des lanthanides, ou l'yttrium, ou encore le scandium. A titre préférentiel, l'élément de terre rare est un élément de la famille des lanthanides, plus préférentiellement le néodyme.

A titre de sel métallique de terre rare utilisable dans ce système catalytique, on peut avantageusement utiliser :

- selon une première variante de l'invention : un sel de terre rare d'un acide phosphorique organique, ou bien,
- selon une deuxième variante de l'invention : un sel de terre rare d'un acide carboxylique.

Lorsque le sel métallique de terre rare est un sel de terre rare d'un acide phosphorique organique, ou organophosphate de terre rare, celui-ci peut être un diesters d'acide phosphorique de formule générale $(R'O)(R''O)PO(OH)$, dans laquelle R' et R", identiques ou différents, représentent un radical alkyle en $C_1$-$C_{10}$, saturé ou insaturé, aryle en $C_6$-$C_{12}$ ou alkylaryle $C_7$-$C_{22}$. Parmi ces diesters d'acide phosphorique, R' et R", identiques ou différents, sont de préférence un radical n-butyle, isobutyle, n-pentyle, isopentyle, 2,2-diméthylhexyle, 1-éthylhexyle, 2-éthylhexyle, tolyle, oléyle ou linoléyle. Parmi ces organophosphates, le bis(2-éthylhexyl)phosphate est préféré.

On peut également utiliser, à titre de sel, un mélange de plusieurs sels métalliques de terre(s) rare(s) d'acide phosphorique organique.

A titre de sel métallique de terre(s) rare(s) d'un acide phosphorique organique utilisable selon l'invention, on peut citer à titre préférentiel le tris[bis(2-éthylhexyl) phosphate] de néodyme.

Le sel de terre(s) rare(s) d'un acide organique phosphorique peut, selon une variante, être utilisé sous forme d'une solution dans un solvant aliphatique ou cycloaliphatique hydrocarboné, de préférence identique au solvant du système catalytique. A titre de sel de terre(s) rare(s) d'un acide phosphorique, on peut par exemple utiliser un organophosphate de terre rare disponible dans le commerce ou encore synthétisé selon l'invention décrite dans WO2009083480 A1. Selon une mise en oeuvre avantageuse de cette variante de l'invention, la solution du sel de terre(s) rare(s) d'un acide phosphorique comprend, outre l'acide organophosphorique résiduel à la préparation du sel, un acide organique ou minéral de pKa à 25°C inférieur à 2,5 tel que décrit dans la demande de brevet des Demanderesses WO 10/133608.

Lorsque le sel métallique de terre rare est un carboxylate, celui-ci peut être un carboxylate d'acide carboxylique aliphatique, linéaires ou ramifiés, ayant 6 à 20 atomes de carbone dans la chaîne linéaire, ou d'acides carboxyliques aromatiques possédant un ou plusieurs noyaux aromatiques, substitués ou non. A titre d'exemple on peut citer le néodécanoate (versatate), le 2-éthylhexanoate, l'octoate, l'hexanoate, linéaires ou ramifiés, ou encore les naphthénates, substitués ou non. Parmi les carboxylates, le 2-éthylhexanoate et le néodécanoate sont préférés.

On peut également utiliser, à titre de sel, un mélange de plusieurs sels métalliques de terre(s) rare(s) d'acide carboxylique.

A titre de sels métalliques de terre rare d'un acide carboxylique utilisables dans le système catalytique conforme à l'invention, on peut citer à titre préférentiel des organocarboxylates du néodyme, et préférentiellement le tris [2-éthylhexanoate] de néodyme ou le tris [versatate] de néodyme.

Selon une variante avantageuse de l'invention, le sel métallique de terre rare est un sel de terre rare d'un acide phosphorique organique, ou organophosphate de terre rare. En effet, selon cette variante, il est possible d'atteindre une forte activité catalytique en utilisant de plus faibles taux d'agent alkylant qu'avec un carboxylate de terre rare, soit dès les bas rapports (agent d'alkylation / sel de terre(s) rare(s)) d'au plus 30, voire d'au plus 15, voire encore d'au plus 10, de préférence de 4 à 10. Cette faible consommation d'agent alkylant contribue à la réduction des coûts pour la mise en oeuvre de l'invention.

Le sel de terre(s) rare(s) peut être préparé de manière connue en soi.

Le système catalytique conforme à l'invention comprend le métal de terre rare selon une concentration égale ou supérieure à 0,005 mol/l. De préférence la concentration en métal de terre rare dans le système catalytique à une valeur allant de 0,010 mol/l à 0,1 mol/l et encore plus préférentiellement allant de 0,02 à 0,08 mol/

Un autre élément constitutif du système catalytique selon l'invention est un solvant hydrocarboné inerte, saturé ou insaturé, dont la température d'ébullition est inférieure à 40°C à pression atmosphérique. Conviennent particulièrement les solvants hydrocarbonés aliphatiques ou alicycliques légers ayant au plus cinq atomes de carbone. A ce titre, on peut citer les alcanes légers en $C_5$ tels que le n-pentane, le 2-méthylbutane, le 2,2-diméthylpropane ou un mélange de ces solvants. On peut également citer d'autres solvants hydrocarbonés en C5, inertes, insaturés, de type aliphatique, tel que le 1-pentène, le 2-pentène, le 2-méthyl-1-butène, le 3-méthyl-1-butène, 2-méthyl 2-butène, ou un mélange de ces solvants.

A titre préférentiel, le solvant hydrocarboné inerte dont la température d'ébullition est inférieure à 40°C à pression atmosphérique est un alcane, plus préférentiellement le n-pentane. En effet, les alcanes sont aisément disponibles commercialement garantissant ainsi une constance dans la qualité et la composition du solvant, ainsi qu'une baisse du coût de production.

Selon une mise en oeuvre particulièrement avantageuse de l'invention, le solvant du système catalytique est identique au solvant volatil de polymérisation. En effet, cette mise en oeuvre permet de diminuer le coût de production car elle ne nécessite pas d'étape supplémentaire coûteuse de séparation des solvants, et réduit le nombre de dispositifs de stockage. Selon cette variante, le solvant présentant une température d'ébullition inférieure à 40°C permet un procédé industriel moins coûteux en énergie car l'élimination du solvant volatil, une fois le polyisoprène synthétisé, est facilitée par son bas point d'ébullition.

Un autre élément constitutif du système catalytique multi-composants selon l'invention est un agent d'alkylation. Cet agent d'alkylation est constitué d'un trialkylaluminium, le radical alkyle étant en $C_1$-$C_{10}$. Ainsi, selon l'invention, l'agent d'alkylation est choisi parmi le triméthylaluminium, le triéthylaluminium, le tri-n-propylaluminium, le triisopropylaluminium, le tri-n-butylaluminium, le tri-t-butylaluminium, , le tri-n-pentylaluminium, le tri-n-hexylaluminium, le tri-n-octylaluminium, le tricyclohexylaluminium.

Selon l'invention, le choix de ces agents alkylant permet de disposer d'un système catalytique sous forme d'une solution homogène et limpide. L'absence de particules insolubles participe fortement à la réduction des coûts en minimisant, voire en supprimant, la contribution du système catalytique aux dépôts dans l'installation et à son encrassement. En effet, l'utilisation dans un procédé en continu d'une solution de catalyseur trouble, conduit à force à un encrassement de la tuyauterie d'injection du système catalytique et de l'unité de fabrication, et à terme au bouchage de certaines canalisation ou dysfonctionnement de certains dispositifs tels que des dispositifs de contrôle de débit, des filtres, clapets, vannes et autres pompes. Le passage répété d'une substance non homogène peut conduire à un encrassement de ces dispositifs et au bouchage de certaines tuyauteries et à terme à des arrêts de la ligne de production qui représentent de manière générale un surcoût pour la mise en oeuvre du procédé continu.

Il a été mis en évidence que le triisobutylaluminium ne contribue pas à atteindre les objectifs de réduction de coût de l'invention, et qu'il est donc exclu des agents alkylation.

Selon une mise en oeuvre préférentielle l'agent d'alkylation est constitué du trioctylaluminium.

Selon l'invention, on notera que le rapport molaire (agent d'alkylation / sel de terre(s) rare(s)) dans ledit système catalytique présente avantageusement une valeur allant de 2 à 50, préférentiellement de 3 à 30 et encore plus préférentiellement de 4 à 15.

Le dernier élément constitutif du système catalytique multi-composants selon l'invention est un agent donneur d'halogène. Parmi ces agents, on peut citer les halogénures d'alkylaluminium. On peut citer à ce titre les monohalogénures et dihalogénures d'alkylaluminium et leurs mélanges, notamment le chlorure de diéthylaluminium, le bromure de diéthylaluminium et le dichlorure d'éthylaluminium. On préfère plus particulièrement le chlorure de diéthylaluminium.

Selon le procédé conforme à l'invention, on notera que le rapport molaire (donneur d'halogène / sel de terre rare) peut présenter une valeur allant de 0,5 à 5, préférentiellement de 2 à 3,8 et encore plus préférentiellement de 2,5 à 3,2.

Des modes de réalisation de l'invention consistent en des combinaisons des différents aspects décrits plus haut et notamment les combinaisons des aspects préférentiels. Ainsi, un mode de réalisation de l'invention est un système catalytique multi-composants, tel que défini plus haut, qui remplit au moins l'une des quatre conditions suivantes et de préférence les quatre :

- le sel de terre(s) rare(s) est un organophosphate de néodyme, préférentiellement le tris[bis(2-éthylhexyl)phosphate] de néodyme ;
- le solvant hydrocarboné inerte est un alcane, préférentiellement le n-pentane;
- l'agent d'alkylation est le trioctylaluminium ; et,
- le donneur d'halogène est un halogénure d'alkylaluminium, préférentiellement le chlorure de diéthylaluminium.

Un autre objet de l'invention est la préparation du système catalytique décrit ci-dessus. Le système catalytique selon l'invention peut être préformé antérieurement à ladite réaction de polymérisation, c'est-à-dire par mise en contact de l'intégralité des différents constituants du système catalytique entre eux, dont l'isoprène de préformation, en une seule ou plusieurs étapes, pendant un temps donné, généralement comprise entre 0 et 120 minutes à une température allant de 10°C à 80°C, puis simultanément ou séquentiellement, préformation du système catalytique pendant un temps compris entre 0 et 120 minutes à une température allant de 10°C à 80°C. Par préformation on entend l'halogénation par l'adjonction du donneur d'halogène et le vieillissement du système catalytique. Ensuite, le système catalytique résultant est mis en contact avec l'isoprène à polymériser dans le solvant volatil.

Le système catalytique préformé conforme à l'invention peut être préparé en discontinu. Il peut également être préparé en continu selon le procédé décrit dans le document de brevet WO-A-2007/045417.

Selon une variante de l'invention, la préparation du système catalytique comprend une phase d'alkylation, soit une étape d'alkylation du sel de terre(s) rare(s), en présence ou non de l'isoprène de préformation, préalablement à la mise en contact avec l'agent donneur d'halogène, étape d'halogénation. L'étape d'alkylation se déroule à une température contrôlée allant de 25°C à 80°C et préférentiellement de 25°C et 35°C° C et pendant une durée caractéristique minimale d'au moins 5 min. et qui, avantageusement, va de 10 min. à 60 min. et préférentiellement de 10 min à 20 min.

Cette variante est tout particulièrement préférée dans la préparation en continu du système catalytique selon laquelle l'étape d'alkylation est réalisée dans un réacteur d'alkylation prévu à cet effet. Pour la mise en oeuvre de cette variante, l'agent d'alkylation est avantageusement choisi parmi le triméthylaluminium, le triéthylaluminium, le tri-n-propylaluminium, le triisopropylaluminium, le tri-n-butylaluminium, le tri-t-butylaluminium, le tri-n-pentylaluminium, le tri-n-hexylaluminium, le tri-octylaluminium, le tricyclohexylaluminium.préférentiellement le tri-n-octylaluminium. Ainsi, la nature de la solution avant halogénation du système catalytique permet d'éviter tout phénomène d'encrassement du réacteur d'alkylation et de la tuyauterie d'injection dans le réacteur d'halogénation, rédhibitoire notamment dans un procédé en continu,

Selon un premier ordre d'ajout des constituants du système catalytique préformé selon l'invention, ceux-ci sont ajoutés comme suit : dans une première étape, on ajoute dans le solvant du système catalytique selon l'invention, l'agent d'alkylation de type trialkylaluminium; dans une seconde étape, on ajoute ensuite le sel de terre(s) rare(s); puis, dans une troisième étape, on ajoute l'isoprène de préformation et dans une dernière étape l'agent donneur d'halogène.

Selon un second ordre d'ajout des constituants du système catalytique préformé selon l'invention, ceux-ci sont ajoutés comme suit : dans une première étape, on ajoute dans le solvant du système catalytique, le sel de terre(s) rare(s); dans une seconde étape on ajoute l'agent d'alkylation de type trialkylaluminium; puis, dans une troisième étape, on ajoute l'isoprène de préformation et dans une dernière étape l'agent donneur d'halogène.

Selon un autre ordre d'ajout des constituants du système catalytique préformé selon l'invention, ceux-ci sont ajoutés comme suit : dans une première étape, on ajoute le sel de terre(s) rare(s) dans le solvant du système catalytique, dans une seconde étape on ajoute l'isoprène de préformation; puis, dans une troisième étape, on ajoute l'agent d'alkylation de type trialkylaluminium et dans une dernière étape, l'agent donneur d'halogène.

A titre d'exemple, l'isoprène de préformation, une solution de sel de terre rare et l'agent alkylant sont mis en contact dans le solvant du système catalytique à 30°C pendant 15 minutes, puis ensuite le donneur d'halogène est ajouté aux précédents constituants et mis en contact à 60°C pendant 50 minutes, puis la solution de système catalytique résultante est ajoutée au monomère à polymériser dissous dans le solvant volatil de polymérisation.

Un autre objet de l'invention est un procédé de préparation de polyisoprène présentant un taux élevé d'enchaînements 1,4-cis mettant en oeuvre le système catalytique décrit plus haut.

Ce procédé selon l'invention consiste à faire réagir en présence du système catalytique décrit plus haut le ou les monomère(s) à polymériser, pour l'obtention d'un polyisoprène pouvant être tout homopolymère ou copolymère obtenu par homopolymérisation de l'isoprène ou copolymérisation de l'isoprène avec au moins un autre monomère diène conjugué ayant de 4 à 12 atomes de carbone. A titre de monomère diène conjugué convient notamment le 1,3-butadiène. De manière préférentielle, ledit polyisoprène est choisi dans le groupe constitué par les polyisoprènes de synthèse (IR), les copolymères de butadiène-isoprène (BIR).

Les polyisoprènes synthétisés selon l'invention ont, dans la partie isoprénique, un taux molaire d'enchaînements 1,4-cis élevé supérieur à 96%, pouvant atteindre des valeurs supérieures à 97%, avec un taux molaire d'enchaînements trans-1,4 inférieur à 1,6%.

La polymérisation peut être effectuée de manière connue en soi, en continu ou en discontinu. On effectue généralement la polymérisation à des températures comprises entre - 30°C et 100°C et de préférence de 0°C à 100°C. La température peut être maintenue constante tout au long du procédé ou peut être variable, selon les caractéristiques visées de l'élastomère synthétisé.

Le procédé de polymérisation peut être mis en oeuvre en solution, en milieu plus ou moins concentré ou dilué. On peut également envisager l'utilisation du système catalytique selon l'invention pour la polymérisation en masse de l'isoprène, soit en l'absence de solvant de polymérisation.

En vue de baisser le coût énergétique du procédé industriel de préparation de polyisoprène lorsque la polymérisation s'effectue en solution, la polymérisation est effectuée en présence d'un solvant hydrocarboné inerte volatil, c'est-à-dire ayant un point d'ébullition inférieur à 40°C, qui peut être par exemple un hydrocarbure aliphatique ou alicyclique ayant au plus 5 atomes de carbone. En effet, l'étape de récupération du polymère synthétisé est facilitée par son bas point d'ébullition. A ce titre, on peut citer les alcanes légers en C5 tels que le n-pentane, le 2-méthylbutane, le 2,2-dimethylpropane ou un mélange de ces solvants. On peut également citer d'autres solvants hydrocarbonés inertes en C5, insaturés, de type aliphatique, tel que le 1-pentène, le 2-pentène, le 2-méthyl-but-1-ène, le 3-méthyl-but-1-ène, 2-méthyl-but-2-ène, ou un mélange de ces solvants. A titre de solvant de polymérisation on préfère utiliser un alcane, plus préférentiellement le n-pentane

De manière particulièrement avantageuse, le solvant de polymérisation est identique au solvant du système catalytique pour les raisons de baisse des coûts évoquées plus haut en rapport avec le solvant du système catalytique.

Selon une variante particulièrement avantageuse pour une application industrielle, le procédé de polymérisation de l'isoprène est conduit en continu en milieu très concentré (en masse et semi-masse). On dit polymériser en milieu très concentré lorsque la quantité de solvant représente de 0 % à 70% en masse par rapport à la masse totale de monomère(s) et de solvant. La quantité de solvant peut être par exemple d'au moins 10% en masse, voire d'au moins 30% en masse, et d'au plus 60% en masse, voire d'au plus 55% en masse de la masse totale de monomère(s) et de solvant.

Selon cette variante, on met en oeuvre la polymérisation jusqu'à atteindre un taux de conversion d'au moins 60% en limite du premier tiers du volume réactionnel du réacteur de polymérisation dimensionné pour que l'écart type de la fonction de distribution de temps de séjour dans ledit réacteur soit supérieur au temps de séjour moyen divisé par $2\sqrt{3}$. Le milieu de polymérisation est agité par le mouvement continu d'au moins un mobile d'agitation autour d'un axe rotatif.

Ce taux de conversion limite de 60%, associé à la caractéristique spécifique relative à la fonction de distribution de temps de séjour de l'invention, est dans le cadre de cette variante de polymérisation en continu de l'isoprène en milieu très concentré, indispensable pour palier la formation de mousse et écarter le phénomène d'expansion du milieu réactionnel. En effet, en dessous de 60% et sans satisfaire la condition relative à la fonction de distribution de temps de séjour de l'invention, on observe la formation de bulles qui rapidement conduit à une expansion incontrôlable du milieu réactionnel. Pour atteindre ce taux de conversion nécessaire d'au moins 60%, l'homme du métier dispose de nombreux leviers ou moyens techniques qu'il peut faire varier en de multiples combinaisons. Parmi ces différents leviers techniques on peut citer la température de réaction, la concentration en monomère dans le milieu réactionnel, la concentration en catalyseur ou initiateur de polymérisation dans le milieu réactionnel, le temps de séjour moyen.... Les moyens à mettre en oeuvre pour atteindre au moins 60% de conversion en limite du premier tiers du volume réactionnel du réacteur de polymérisation sont à la portée de l'homme du métier. La simple consigne d'atteindre une limite minimale de conversion, en l'occurrence au moins 60% en limite du premier tiers du volume réactionnel du réacteur de polymérisation, constitue pour lui une identification des combinaisons de moyens à mettre en oeuvre pour exécuter cette consigne.

Le taux de conversion peut être déterminé de différentes façons, connues de l'homme de l'art. Par exemple, le taux de conversion peut être déterminé à partir d'une mesure réalisée sur un échantillon prélevé en limite du premier tiers du volume réactionnel du réacteur de polymérisation par exemple par chromatographie en phase gazeuse (CPG). On mesure la concentration de monomère(s) résiduel(s) (non converti(s)) dans l'échantillon. Par différence entre la concentration du ou des monomère(s) introduit(s) dans le réacteur de polymérisation ($C_i$) et la concentration de monomère(s) résiduel(s) mesurée dans l'échantillon prélevé ($C_r$), on détermine le taux de conversion en pourcentage massique comme étant :

$$X\%\,mass = 100 * \left[ \frac{(C_i - C_r)}{C_i} \right]$$

avec :

$X\%\,mass$ : taux de conversion en pourcentage massique ;
$C_i$ : concentration du ou des monomères introduite dans le réacteur de polymérisation;
$C_r$ : concentration du ou des monomères résiduels mesurée dans l'échantillon prélevé ;

Préférentiellement ce taux de conversion au premier tiers du réacteur de polymérisation est d'au moins 70% et plus préférentiellement encore de 80% à 100%, pour une productivité croissante.

L'autre caractéristique indispensable pour cette variante avantageuse concerne les conditions d'écoulement dans le réacteur pendant la réaction de polymérisation. La caractérisation de ces écoulements par une fonction de distribution de temps de séjour est telle que l'écart type de la fonction de distribution de temps de séjour est supérieur au temps de séjour moyen divisé par $2\sqrt{3}$. Plus particulièrement, l'écart type de la fonction de distribution de temps de séjour est supérieur au temps de séjour moyen divisé par 2. La fonction de distribution de temps de séjour dans le réacteur de polymérisation peut être déterminée de manière connue en soi par un homme du métier. Par exemple, elle peut être déterminée par la modélisation des points expérimentaux obtenus en mesurant par Chromatographie Phase Gaz les évolutions de concentration d'un traceur en sortie du réacteur, suite à une injection très rapide, de ce traceur, selon un mode d'introduction par impulsion d'un produit chimiquement inerte selon le principe décrit dans le livre Jacques Villermaux, Génie de la réaction chimique : conception et fonctionnement des réacteurs. Editors. 1993, TEC & DOC - LAVOISIER, Page 170 à 172. La combinaison de ces deux caractéristiques de conversion et d'écoulement permet de disposer d'un procédé de synthèse, en milieu très concentré, en présence d'un solvant volatil le cas échéant, et en continu, de polyisoprène présentant une productivité accrue, et une flexibilité remarquable du fait de l'absence d'expansion.

Toujours selon cette variante avantageuse, le réacteur de polymérisation est doté d'une phase gaz et équipé d'au moins un mobile d'agitation et d'un dispositif de décharge. Le mobile d'agitation permet une agitation continue du milieu réactionnel. Il peut être de forme variée et est adapté à la technologie du réacteur. De nombreux types peuvent être trouvés dans le commerce. A titre d'exemple, le mobile d'agitation peut être une pâle de type sigma (ou en "Z") ou un autre type de pâles tel que décrit dans le livre David B. Todd, Mixing of Highly Viscous Fluids, Polymers, and Pastes, in Handbook of Industrial Mixing: Science and Practice, E.L. Paul, V.A. Atiemo-Obeng, and S.M. Kresta, Editors. 2004, John Wiley and Sons. Page 998, Page 1021.

Selon des configurations préférées, le réacteur de polymérisation est plus particulièrement de technologie malaxeur à bras en Z. Par technologie malaxeur à bras en Z, on entend plus particulièrement un mélangeur ou malaxeur formé d'une cuve équipée de deux bras en Z, mus chacun indépendamment ou non autour d'un axe rotatif, de préférence horizontal. Les deux bras en Z sont alors préférentiellement mus en rotation contre-rotative de manière à gaver le dispositif de vidange en fond de cuve.

A titre d'exemple, ce réacteur conforme à l'invention est commercialisé sous divers dénominations telles que :

- les malaxeurs à pâles sigma - vis de décharge, ou en anglais « sigma blades mixer-discharge screw type », commercialisés par la société Battaggion SPA,
- les malaxeurs-extrudeurs ou en anglais « extrusion-kneader », commercialisés par la société Aachener Misch- und Knetmaschinenfabrik Peter Küpper GmbH & Co. KG,
- les malaxeurs doubles Z avec vis d'extrusion ou en anglais « double-z-kneader with extrusion screw », commercialisés par la société Hermann Linden Maschinenfabrik GmbH & Co. KG.,
- les malaxeurs extrudeurs ou en anglais « mixer extruders », commercialisés par la société Aaron Process Equipment Company.

Le réacteur de polymérisation est doté d'une phase gaz permettant l'évacuation de la chaleur de polymérisation par vaporisation d'une partie du milieu réactionnel. Le rapport volumique de la phase gaz au milieu réactionnel dépend du type de réacteur utilisé et sa détermination est à la portée de l'homme de l'art. Le réacteur de polymérisation est également doté d'un dispositif de décharge totalement ou partiellement intégré au réacteur de polymérisation, tel qu'un dispositif de soutirage à engrenages ou à vis, disposé en fond ou sur le côté du réacteur.

A l'issue de l'étape de polymérisation en continu, le procédé peut être poursuivi de manière connue en soi.

Selon une mise en oeuvre de l'invention, le procédé de polymérisation en continu incorpore les étapes du procédé de préparation en continu du système catalytique notamment tel décrit dans le document de brevet WO-A-2007/045417 dans tous leurs aspects, préférentiels ou non, notamment l'étape d'alkylation avant halogénation et vieillissement.

Selon d'autres variantes d'exécution du procédé de polymérisation catalytique conforme à l'invention, on peut introduire dans le réacteur de polymérisation, indépendamment de l'introduction du système catalytique utilisé pour la réaction de polymérisation, une quantité supplémentaire prédéterminée d'au moins un composé alkylaluminium de formules $AlR_3$ ou $HAlR_2$ ou $R''_nAlR'_{3-n}$, dans lesquelles R, R' et R'' représentent un groupe alkyle de 1 à 20 atomes de carbone, saturé ou non, préférentiellement de un à douze atomes de carbone, n un entier inclusivement de 1 à 3 et H représente un atome d'hydrogène. De telles variantes sont décrites notamment dans les documents WO2006133757, EP 1845118, WO 10/069511, WO10/069805. L'introduction se fait dans le réacteur de polymérisation lorsqu'on opère en discontinu ou dans l'unité de polymérisation lorsqu'elle fonctionne en continu, de manière décalée par rapport au système catalytique utilisé pour la réaction de polymérisation, c'est-à-dire pas en même temps et, par conséquent, soit avant, soit après, soit en partie avant et en partie après, par rapport à l'introduction du système catalytique utilisé pour initier la réaction de polymérisation.

Selon une mise en oeuvre avantageuse de cette variante de procédé de polymérisation, le composé alkylaluminium est différent du composé trialkyaluminium utilisé pour préparer le système catalytique

Selon autre mise en oeuvre, de cette variante de procédé de polymérisation, le composé alkylaluminium est identique au composé trialkyaluminium utilisé pour préparer le système catalytique

A titre de composé alkylaluminium, on peut citer des alkylaluminiums tels que:

- des trialkylaluminiums tels que par exemple le triméthylaluminium, le triéthylaluminium, le tri-n-propylaluminium, le triisopropylaluminium, le tri-n-butylaluminium, le tri-t-butylaluminium, le triisobutylaluminium, le tri-n-pentylaluminium, le tri-n-hexylaluminium, le tricyclohexylaluminium, de préférence le triisobutylaluminium ou
- des hydrures de dialkylaluminium tels que par exemple l'hydrure de diéthylaluminium, l'hydrure de diisopropylaluminium, l'hydrure de di-n-propylaluminium, l'hydrure de diisobutylaluminium, l'hydrure de di-n-octylaluminium, l'hydrure de di-n-butylaluminium, de préférence l'hydrure de diisobutylaluminium.

Avantageusement, le rapport molaire (composé alkylaluminium ajouté en décalé / trialkylaluminium dans le

système catalytique) varie de 1/20 à 50/1, préférentiellement varie de 1/15 à 30/1 et encore plus préférentiellement de 1/10 à 20/1.

On notera que l'ajout du composé alkylaluminium avant polymérisation permet de s'affranchir des fluctuations dans le temps des impuretés dues aux solvants et aux monomères injectés en entrée de ligne et de ne pas pénaliser, du fait de ces fluctuations, l'activité du système catalytique. Cette variante d'exécution de l'invention permet ainsi de minimiser la dispersion des caractéristiques de l'élastomère obtenu. Selon certaines mises en oeuvre, la quantité dudit composé alkylaluminium préalablement mis en présence avec le ou les monomère(s) à polymériser, au moins l'isoprène, varie de 10 à 5000 micromoles pour 100 g de monomère(s) à polymériser, en fonction de la quantité d'impuretés présentes dans le milieu de polymérisation, telles que des impuretés provenant de solvants de recyclage.

On comprendra qu'une combinaison de l'ajout d'un composé alkylaluminium avant polymérisation et de la variante d'exécution en continu du procédé de synthèse de polyisoprène en milieu très concentré décrite plus haute, constitue une variante particulièrement avantageuse pour la mise en oeuvre industrielle d'un procédé continu.

Cette variante particulièrement avantageuse est combinable avec l'ensemble des variantes et mises en oeuvre, préférentielles ou non, décrites plus haut notamment en rapport avec la composition et la préparation du système catalytique.

Avantageusement et en comparaison à un procédé mettant en oeuvre un système catalytique tel que décrit par exemple dans les documents WO-A-02/38636, WO-A-03/097708 et WO-A-2007045417, le procédé selon l'invention permet d'obtenir avec une activité catalytique équivalente, un polyisoprène caractérisé par un taux élevé de motifs 1,4-cis, tout en conservant les avantages d'une polymérisation en solvant volatil.

Cet élastomère peut être par exemple constitué d'un polyisoprène (IR) ou d'un copolymère de butadiène et de l'isoprène (BIR).

On notera que les systèmes catalytiques utilisés dans le procédé selon l'invention permettent notamment d'obtenir des homopolymères de l'isoprène (IR) présentant un taux d'enchaînements 1,4-cis (mesuré par la technique « NIR » de dosage par proche infrarouge, expliquée plus bas) qui est supérieur à 96 voire d'au moins 97%, ce qui peut être qualifié de taux élevé en motifs 1,4-cis.

Les caractéristiques précitées de la présente invention, ainsi que d'autres, seront mieux comprises à la lecture de la description suivante de plusieurs exemples de réalisation de l'invention, donnés à titre illustratif et non limitatif.

METHODES DE MESURE

**Détermination de la microstructure des polyisoprènes obtenus.**

On a utilisé la technique de dosage appelée « proche infrarouge » (NIR). Il s'agit d'une méthode indirecte faisant appel à des élastomères « témoin » dont la microstructure a été mesurée par la technique de RMN[13]C. On utilise la relation quantitative (loi de Beer-Lambert) existant entre la répartition des monomères dans un élastomère et la forme du spectre NIR de celui-ci. Cette technique est mise en oeuvre en deux étapes :

1) <u>Etalonnage</u> :

- On procède à l'acquisition des spectres respectifs des élastomères « témoin ».
- On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :

  (1) P. GELADI et B. R. KOWALSKI« Partial Least Squares régression : a tutorial »,Analytica Chimica Acta, vol. 185, 1-17 (1986).
  (2) M. TENENHAUS« La régression PLS - Théorie et pratique »Paris, Editions Technip (1998).

2) <u>Mesure</u> :

- On procède à un enregistrement du spectre de l'échantillon.
- On réalise le calcul de la microstructure.

**Détermination de la distribution des masses molaires des polyisoprènes obtenus par la technique de chromatographie d'exclusion stérique (SEC).**

a) Principe de la mesure:

La chromatographie d'exclusion stérique ou SEC (size exclusion chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

b) Préparation du polymère:

Il n'y a pas de traitement particulier de l'échantillon de polymère avant analyse. Celui-ci est simplement solubilisé dans du tétrahydrofurane à une concentration d'environ 1 g/l.

c) Analyse SEC:

Cas c1) L'appareillage utilisé est une chaîne chromatographique « WATERS alliance ». Le solvant d'élution est le tétrahydrofurane, le débit de 1 ml/min., la température du système de 35° C et la durée d'analyse de 30 min. On utilise un jeu de deux colonnes WATERS de dénomination commerciale « STYRAGEL HT6E ».

Le volume injecté de la solution de l'échantillon de polymère est 100 $\mu$l. Le détecteur est un réfractomètre différentiel « WATERS 2140 » et le logiciel d'exploitation des données chromatographiques est le système « WATERS MILLENIUM ».

Cas c2) L'appareillage utilisé est un chromatographe « WATERS alliance ». Le solvant d'élution est le tétrahydrofurane, le débit de 0,7 ml/mn, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 $\mu$l. Le détecteur est un réfractomètre différentiel « WATERS modèle RI32X » et le logiciel d'exploitation des données chromatographiques est le système « WATERS MILLENIUM ».

**Détermination de la viscosité inhérente.**

La viscosité inhérente $\eta$inh est mesurée à 25°C à 0,1 g/dL dans le toluène et caractérise la macrostructure de l'élastomère.

La viscosité est calculée par la formule

$$\eta = \frac{1}{C} \times \ln\left(\frac{T_1}{T_2}\right)$$

avec $\eta$ la viscosité inhérente (dL/g), C la concentration en polymère dans le toluène (g/dL), T1 le temps d'écoulement de la solution de polymère (centième de minute) et T2 le temps d'écoulement du toluène (centième de minute)

EXEMPLES

**Définitions d'abréviation utilisées dans les exemples :**

Nd = néodyme
Bd = butadiène
Isop = isoprène
MCH = methylcyclohexane

HDiBA = hydrure de diisobutylaluminium
TOA = trioctylaluminium
CDEA = chlorure de diéthylaluminium
TiBA = triisobutylaluminium

**Synthèse de catalyseurs «témoin» discontinus préparés dans un solvant « lourd » :**

Le catalyseur témoin est le système Nd/Bd/HDiBA/CDEA selon l'invention WO-A-02/38636 au nom des Demanderesses. En vue de l'obtention de ce catalyseur témoin, le sel de phosphate de néodyme à l'état de poudre est introduit dans une bouteille "Steinie" de 250 ml préalablement lavée et étuvée. Cette bouteille est ensuite refermée à l'aide d'un septum en caoutchouc et d'une capsule perforée. Le sel est ensuite soumis à un barbotage à l'azote pendant 10 min dans le but de rendre le milieu réactionnel inerte. Les étapes successives suivantes sont ensuite réalisées :

- Première étape de solvatation :

Un solvant constitué de MCH préalablement distillé, purifié sur alumines et barboté à l'azote est introduit dans la bouteille "Steinie". En vue de la formation d'un gel, la durée et la température de mise en contact de ce solvant et du sel de néodyme sont de 10h à température ambiante.

- Seconde étape d'addition du monomère :

Le butadiène préalablement purifié sur alumines et barboté à l'azote est ensuite introduit dans la bouteille "Steinie" à température ambiante. Ce monomère servira à préformer le catalyseur lors de l'étape de vieillissement.

- Troisième étape d'alkylation :

L'HDiBA en solution dans le MCH est ensuite introduit dans la bouteille "Steinie" à titre d'agent d'alkylation du sel de néodyme, selon une concentration d'environ 1 mol/L. La durée de l'alkylation est de 15 min. La température de la réaction d'alkylation est égale à 30° C.

- Quatrième étape d'halogénation :

Le CDEA en solution dans le MCH est ensuite introduit dans la bouteille "Steinie" à titre de donneur d'halogène, selon une concentration d'environ 0,5 mol/L. La température du milieu réactionnel est portée à 60° C.

- Cinquième étape de vieillissement :

Le mélange ainsi obtenu est vieilli en maintenant la température de 60° C pendant une durée de 50 min.
La solution catalytique obtenue est finalement stockée sous atmosphère d'azote à une température comprise entre -15° C et -5° C.
Les catalyseurs sont caractérisés par leur formule catalytique qui est donnée sous la forme Nd/Monomère/Agent Alkylant/Agent halogénant en rapports molaires indexés sur le sel de néodyme. Dans les exemples, leur concentration en néodyme est de 0,02 mol/L.

**Synthèse de catalyseurs discontinus selon l'invention préparés dans un solvant volatil :**

Les catalyseurs selon l'invention sont de formule Nd/Isop/TOA/CDEA dilués dans le n-pentane.
En vue de l'obtention de ce catalyseur, le sel de phosphate de néodyme à l'état de poudre est introduit dans une bouteille "Steinie" de 250 ml préalablement lavée et étuvée. Cette bouteille est ensuite refermée à l'aide d'un septum en caoutchouc et d'une capsule perforée. Le sel est ensuite soumis à un barbotage à l'azote pendant 10 min dans le but de rendre le milieu réactionnel inerte. Les étapes successives suivantes sont ensuite réalisées :

- Première étape de solvatation :

Un solvant constitué de n-pentane préalablement purifié sur alumines et barboté à l'azote est introduit dans la bouteille "Steinie". En vue de la formation d'un gel, la durée et la température de mise en contact de ce solvant et du sel de néodyme sont de 10h à température ambiante.

- Seconde étape d'addition du monomère :

L'isoprène préalablement purifié sur alumine et barboté à l'azote est ensuite introduit dans la bouteille "Steinie" à température ambiante. Ce monomère servira à préformer le catalyseur lors de l'étape de vieillissement.

- Troisième étape d'alkylation :

Le TOA en solution dans le n-pentane est ensuite introduit dans la bouteille "Steinie" à titre d'agent d'alkylation du sel de néodyme, selon une concentration d'environ 1 mol/L. La durée de l'alkylation est de 15 min. La température de la réaction d'alkylation est égale à 30° C.

- Quatrième étape d'halogénation :

Le CDEA en solution dans le n-pentane est ensuite introduit dans la bouteille "Steinie" à titre de donneur d'halogène, selon une concentration d'environ 0,5 mol/L. La température du milieu réactionnel est portée à 60° C.

- Cinquième étape de vieillissement :

Le mélange ainsi obtenu est vieilli en maintenant la température de 60° C pendant une durée de 50 min.
La solution catalytique obtenue est finalement stockée sous atmosphère d'azote à une température comprise entre -15° C et -5 ° C.
Les catalyseurs sont caractérisés par leur formule catalytique qui est donnée sous la forme Nd/Monomère/Agent Alkylant/Agent halogénant en rapports molaires indexés sur le sel de néodyme. Dans les exemples, la concentration en néodyme des catalyseurs discontinus est de 0,02 mol/L.
D'autres catalyseurs sont décrits dans les exemples et dans le(s) tableau(x) 1 à 3 ci-après et se différencient de par la nature des différents constituants et de par leur solvant de préparation. Le mode opératoire pour la préparation de ces autres catalyseurs est identique à ceux décrits plus hauts.
L'aspect, notamment la solubilité des différentes solutions catalytiques préparées, a été évaluée visuellement. Les catalyseurs homogènes ont ensuite été testés en polymérisation de l'isoprène conformément aux modes opératoires décrits ci-après.

**Mode opératoire suivi pour les polymérisations discontinues**

La polymérisation est réalisée pour ces exemples dans des bouteilles "Steinie" de 250 mL dont l'étanchéité est assurée par un ensemble de type "joint-capsule percée" permettant l'injection des réactifs au moyen de seringues. La polymérisation est réalisée avec un rapport massique Solvant/Monomère sous atmosphère inerte d'azote égal à 5,8. Elle est effectuée sous agitation et avec un maintien en température dans un bac à eau thermo-régulée.
Le monomère diénique à polymériser (i.e. l'isoprène) ainsi que le solvant de polymérisation (i.e. le n-pentane) sont préalablement purifiés sur alumine et barbotés à l'azote.
Dans une bouteille "Steinie" de 250 mL préalablement barbotée à l'azote sont introduits 88 mL (55 g) de n-pentane auxquels sont ajoutés 9,5 g d'isoprène. L'alkylaluminium pré-ajouté au milieu de polymérisation, le cas échéant, est ensuite injecté à la seringue sous la forme d'une solution à environ 0,2 mol/L dans le n-pentane, suivi du catalyseur selon les quantités indiquées dans les tableaux ci-après. La bouteille est alors placée sous agitation à 50 °C durant un temps déterminé. 1 mL de méthanol est ensuite additionné pour stopper la réaction puis, 1 mL d'une solution de N-1,3-diméthylbutyl-N'-phényl-paraphénylènediamine à 20 g/L destiné à antioxyder le polyisoprène est enfin ajouté.

**Mode opératoire suivi pour les polymérisations continues**

La polymérisation continue est mise en oeuvre sur une ligne comprenant un réacteur avec phase gaz à double bras en Z de 150 litres total, muni d'un dispositif de décharge avec une vis de vidange et une pompe à engrenage. De l'isoprène et du n-pentane sont préalablement mélangés dans un mélangeur dynamique en amont du réacteur de polymérisation. L'isoprène est injecté avec un débit de 9,28 kg/h dans le mélangeur et le pentane avec un débit de 10,84 kg/h. Une solution d'alkylaluminium concentrée à environ 0,3 mol/L dans le n-pentane est également introduite dans le mélangeur dynamique. Le mélange de ces 3 flux obtenu à la sortie du mélangeur dynamique est injecté directement dans le réacteur. Le catalyseur est injecté selon un flux distinct et indépendant directement dans le réacteur. La concentration en monomère en entrée du réacteur est d'environ 45% massique. La pression de la phase gaz est régulée à 0.5 barg,
**[0118]** Le temps de séjour moyen de la réaction est de 80 minutes.

La vis de décharge permet de transférer le produit du réacteur vers une pompe à engrenage.

0,5 pcm (pcm : parties en masse pour 100 parties en masse de monomère isoprène) de N-1,3-diméthylbutyl-N'-phényl-paraphénylènediamine, jouant le rôle de stoppeur et d'antioxydant est injectée en sortie du réacteur en amont de la pompe à engrenage.

La pompe à engrenage transfère la pâte d'élastomères vers un granulateur sous eau. Le débit transféré par la pompe à engrenage est égal à la somme des débits entrants dans le réacteur auquel s'ajoutent les débits de stoppeur et d'antioxydant. Le procédé se poursuit ensuite de manière connue en soi par la séparation et récupération de l'élastomère diénique préparé.

Aucun phénomène d'expansion n'est observé.

La conversion mesurée sur un échantillon prélevé, en limite du premier tiers du volume du réacteur est de 77%. La mesure de conversion a été établie à partir d'une mesure par CPG de l'isoprène dans l'échantillon prélevé. L'isoprène résiduel, dans l'échantillon prélevé, a été dosé à 10% massique.

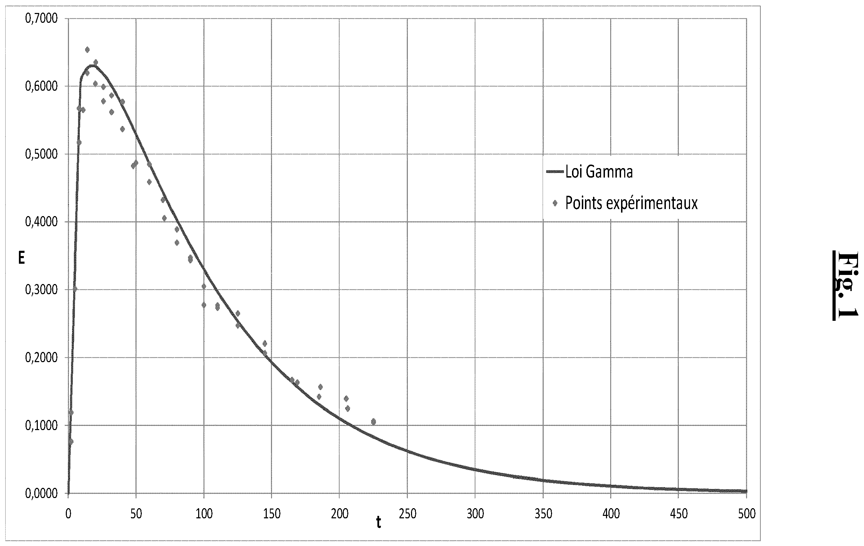

Les écoulements sont caractérisés par la distribution de temps de séjour donnée par la figure 1.

Les points expérimentaux permettant d'établir cette distribution de temps de séjour ont été obtenus en mesurant par Chromatographie Phase Gaz les évolutions de concentration d'un traceur suite à une injection très rapide selon un mode d'introduction par impulsion d'un produit chimiquement inerte selon le principe décrit dans le livre Jacques Villermaux, Génie de la réaction chimique : conception et fonctionnement des réacteurs. Editors. 1993, TEC & DOC - LAVOISIER, Page 170 à 172. Les points expérimentaux sont issus de prélèvements effectués en sortie du réacteur, à l'extrémité de la vis de vidange.

La modélisation de ces points expérimentaux par une loi gamma a permis de déterminer la variance de la fonction E de distribution de temps de séjour.

La loi gamma pour modéliser la fonction E de distribution de temps de séjour est la suivante :

$$E = \frac{t^{k-1} * e^{\frac{-t}{t_0}}}{\Gamma(k) t_0^k}$$

Avec:

$\Gamma(k)$ : fonction gamma de k ;

$k$ : constante ;

$t_0$ : temps de séjour moyen, soit 80 minutes ;

$t$ : temps de séjour ;

La variance de cette fonction de distribution de temps de séjour est égal à $k * t_0^2$ L'ajustement de la fonction aux points expérimentaux permet de déterminer le paramètre k, qui est égal à 1.22

On en déduit l'écart type de la fonction de distribution de temps de séjour qui est égal à 88.4, ce qui est supérieur au temps de séjour moyen divisé par 2√3, soit $\frac{t_0}{2\sqrt{3}} = \frac{80}{2\sqrt{3}} = 23.1.$

**Présentation des essais**

Le tableau 1 présente la solubilité dans les alcanes volatils de différents catalyseurs selon leur formule catalytique. Ils ont été préparés en discontinu selon le mode opératoire décrit ci-avant.

*Tableau 1 : solubilité des catalyseurs dans les alcanes volatils*

| Essai | Référence du catalyseur | Formule catalytique | Stoechiométrie | Solvant de dilution | Aspect visuel* fin alkylation | Aspect visuel fin vieillissement |
|---|---|---|---|---|---|---|
| 1 | A | Nd/Bd/ HDiBA/ CDEA | 1/30/1,8/2,8 | MCH | 1 | 1 |

(suite)

| Essai | Référence du catalyseur | Formule catalytique | Stoechiométrie | Solvant de dilution | Aspect visuel* fin alkylation | Aspect visuel fin vieillissement |
|---|---|---|---|---|---|---|
| 2 | B | Nd/Bd/ HDiBA/ CDEA | 1/30/8/2,8 | MCH | 1 | 1 |
| 3 | C | Nd/Bd/ HDiBA/ CDEA | 1/30/1,8/2,6 | n-pentane | 1 | 3 |
| 4 | D | Nd/Bd/ HDiBA/ CDEA | 1/20/1,8/2,6 | n-pentane | 1 | 3 |
| 5 | E | Nd/Bd/ HDiBA/ CDEA | 1/10/1,8/2,6 | n-pentane | 1 | 3 |
| 6 | F | Nd/Bd/ HDiBA/ CDEA | 1/30/1,8/2,6 | Isopentane | 1 | 3 |
| 7 | G | Nd/Bd/ HDiBA/ CDEA | 1/20/1,8/2,6 | Isopentane | 1 | 3 |
| 8 | H | Nd/Bd/TiBA/ CDEA | 1/30/8/2,8 | n-pentane | 3 | 3 |
| 9 | I | Nd/Bd/TOA/ CDEA | 1/30/8/2,8 | n-pentane | 1 | 3 |
| 10 | J | Nd/Isop/ HDiBA/ CDEA | 1/30/1,8/2,8 | n-pentane | 1 | 1 |
| 11 | K | Nd/Isop/ HDiBA/ CDEA | 1/30/8/2,8 | n-pentane | 1 | 1 |
| 12 | L | Nd/Isop/ TiBA/CDEA | 1/30/4/2,6 | n-pentane | 3 | 2 |
| 13 | M | Nd/ Isop/TOA/ CDEA | 1/30/4/2,8 | n-pentane | 1 | 1 |
| 14 | N | Nd/ Isop/TOA/ CDEA | 1/30/5/2,8 | n-pentane | 1 | 1 |
| 15 | O | Nd/ Isop/TOA/ CDEA | 1/30/7/2,8 | n-pentane | 1 | 1 |
| 16 | P | Nd/ Isop/TOA/ CDEA | 1/30/8/2,8 | n-pentane | 1 | 1 |

* : Appréciation visuelle : (1) : Limpide homogène; (2) Trouble/turbide, présence de particules solides ; (3) hétérogène et déphase à température ambiante

Catalyseurs à base de butadiène :

Les essais 1 et 2 sont des catalyseurs témoins. Dans ces exemples, les catalyseurs A et B de formule Nd/Bd/HDi-BA/CDEA sont synthétisés dans le MCH respectivement selon l'invention décrite dans WO 02/38636 et WO 2003/097708 au nom des demanderesses. Dans ces conditions de synthèse, les catalyseurs obtenus sont homogènes et limpides.
Les essais 3 à 5 montrent que l'utilisation du n-pentane en tant que solvant de préparation du système catalytique de formule Nd/Bd/HDiBA/CDEA ne permet pas l'obtention de catalyseurs homogènes, même en modifiant la quantité de diène conjugué de préformation, c'est-à-dire la longueur du prépolymère.

Les essais 6 et 7 montrent que l'utilisation de l'isopentane en tant que solvant de préparation du système catalytique de formule Nd/Bd/HDiBA/CDEA ne permet pas l'obtention de catalyseurs homogènes, même en modifiant la quantité de diène conjugué de préformation, c'est-à-dire la longueur du prépolymère.

Les essais 8 et 9 montrent que l'utilisation du n-pentane en tant que solvant de préparation du système catalytique Nd/Bd/AlR$_3$/CDEA ne permet pas l'obtention de catalyseurs homogènes, même en changeant la nature de l'agent alkylant (remplacement d'un hydrure de dialkylaluminium par un trialkylaluminium).

Il n'est donc pas possible de diluer un catalyseur de formule Nd/Bd/HAlR$_2$ ou AlR$_3$/CDEA dans un alcane volatil dont la température d'ébullition est inférieure à 40°C à pression atmosphérique, tel que les alcanes en C5.

Catalyseurs à base d'isoprène :

Les essais 10 et 11 montrent que remplacer le butadiène par de l'isoprène dans un système catalytique préformé de formule Nd/Bd/HDiBA/CDEA permet l'obtention d'un catalyseur homogène et limpide.

Les essais 12 à 16 montrent que selon la nature de l'agent alkylant, il n'est pas systématiquement possible d'obtenir un système catalytique préformé de type Nd/Isop/AlR$_3$/CDEA qui soit homogène et limpide.

Dans la suite des exemples, les catalyseurs homogènes et solubles obtenus ci-dessus ont été mis en oeuvre en polymérisation discontinue de l'isoprène selon le mode opératoire décrit ci-avant. Les résultats sont reportés dans le tableau 2.

*Tableau 2 : Test en polymérisation des catalyseurs discontinus homogènes*

| Essai | Notation | Référence catalyseur | Formule catalytique | Stoechiométrie | Solvant | AlkylAluminium préajouté (µmolcm) | Concentration Nd (µmolcm) | Conversion après 30 minutes (%) | * Activité |
|---|---|---|---|---|---|---|---|---|---|
| 17 | Témoin 1 | A | Nd/Bd/ HDiBA/ CDEA | 1/30/1,8/2,8 | MCH | Aucun | 202 | 66 | = |
| 18 | Témoin 2 | A | Nd/Bd/ HDiBA/ CDEA | 1/30/1,8/2,8 | MCH | HDiBA (181) | 202 | 79 | = |
| 19 | C-Ex 1 | B | Nd/Bd/ HDiBA/ CDEA | 1/30/8/2,8 | MCH | Aucun | 202 | 58 | - |
| 20 | C-Ex 2 | B | Nd/Bd/ HDiBA/ CDEA | 1/30/8/2,8 | MCH | HDiBA (181) | 202 | 58 | - |
| 21 | C-Ex 3 | J | Nd/Isop/ HDiBA/ CDEA | 1/30/1,8/2,8 | Pentane | HDiBA (181) | 202 | 66 | - |
| 22 | C-Ex 4 | K | Nd/Isop/ HDiBA/ CDEA | 1/30/8/2,8 | Pentane | HDiBA (181) | 202 | 68 | - |
| 23 | Ex 1 | N | Nd/ Isop/TOA/ CDEA | 1/30/5/2,8 | Pentane | TIBA (400) | 202 | 99 (60') | = |
| 24 | Ex 2 | N | Nd/ Isop/TOA/ CDEA | 1/30/5/2,8 | Pentane | TIBA (800) | 202 | 99 (60') | = |
| 25 | Ex 3 | N | Nd/ Isop/TOA/ CDEA | 1/30/5/2,8 | Pentane | TIBA (1500) | 202 | 99 (60') | = |
| 26 | Ex 4 | O | Nd/ Isop/TOA/ CDEA | 1/30/7/2,8 | Pentane | TIBA (923) | 202 | 86 | = |
| 27 | Ex 5 | N | Nd/ Isop/TOA/ CDEA | 1/30/5/2,8 | Pentane | TOA (510) | 202 | 95 (60') | = |

(suite)

| Essai | Notation | Référence catalyseur | Formule catalytique | Stoechiométrie | Solvant | AlkylAluminium préajouté (µmolcm) | Concentration Nd (µmolcm) | Conversion après 30 minutes (%) | * Activité |
|---|---|---|---|---|---|---|---|---|---|
| 28 | Ex 6 | N | Nd/ Isop/TOA/ CDEA | 1/30/5/2,8 | Pentane | TOA (860) | 202 | 95 (60') | = |
| 29 | Ex 7 | N | Nd/ Isop/TOA/ CDEA | 1/30/5/2,8 | Pentane | TOA (1550) | 202 | 95 (60') | = |
| 30 | Ex 8 | P | Nd/ Isop/TOA/ CDEA | 1/30/8/2,8 | Pentane | aucun | 202 | 72 | = |
| 31 | Ex 9 | P | Nd/ Isop/TOA/ CDEA | 1/30/8/2,8 | Pentane | HDIBA (181) | 202 | 82 | = |

µmolcm : µmol pour 100 g de monomère à polymériser *(=) activité catalytique conforme au catalyseur témoin ; (-) activité en retrait par rapport au catalyseur témoin

Les essais 17 et 18 sont des essais témoins réalisés avec le catalyseur A de formule Nd/Bd/HDiBA/CDEA synthétisé dans le MCH selon l'invention WO 02/38636 au nom des demanderesses. À la différence de l'essai 17, un alkylaluminium est pré-ajouté dans le milieu de polymérisation avant l'injection du catalyseur pour l'essai 18, selon l'invention WO2006133757A1 au nom des demanderesses.

La comparaison des essais 18 et 21 montre que l'utilisation de l'isoprène comme monomère de préformation dans la formule catalytique Nd/monomère/HDiBA/CDEA ne permet pas l'obtention d'un catalyseur aussi actif que le catalyseur témoin Nd/Bd/HDiBA/CDEA synthétisé selon l'invention WO 02/38636 au nom des demanderesses.

La comparaison des essais 21 et 22 montre que l'augmentation du rapport HDiBA/Nd dans les catalyseurs de formule Nd/Isop/HDiBA/CDEA ne permet pas de gain significatif d'activité et ne permet donc pas de d'obtenir une activité similaire à celle d'un catalyseur témoin de formule Nd/Bd/HDiBA/CDEA (essai 18).

La comparaison des essais 30 et 17 ainsi que celle des essais 31 et 18 montrent que l'association de l'isoprène et du TOA conduit à l'obtention de catalyseurs de formule Nd/Isop/TOA/CDEA d'activité au moins équivalente à celle du catalyseur témoin Nd/Bd/HDiBA/CDEA synthétisé selon l'invention WO-A-02/38636 au nom des demanderesses.

Le tableau 3 présente les résultats de macrostructure et de microstructure des polyisoprènes obtenus lors des polymérisations discontinues présentées dans le tableau 2.

*Tableau 3 : Caractéristiques des polyisoprènes obtenus lors des essais 17 à 31*

| Essai | Notation | Référence catalyseur | Viscosité inhérente (dl/g) | Mn (g/mol) / Ip | % 1,4-cis | % 1,4-trans | % 3,4 |
|---|---|---|---|---|---|---|---|
| **17** | Témoin 1 | A | 4.5 | 611000/2.26 | 98.4 | ND | 1.6 |
| **18** | Témoin 2 | A | 3.3 | 373000/2.28 | 98.4 | ND | 1.6 |
| **23** | Ex 1 | N | 5.8 | | | | |
| **24** | Ex 2 | N | 5.3 | | | | |
| **25** | Ex 3 | N | 4.5 | | | | |
| **26** | Ex 4 | O | 3.9 | 295000/2.51 | 97.3 | ND | 1.7 |
| **27** | Ex 5 | N | 6.2 | | | | |
| **28** | Ex 6 | N | 6.2 | | | | |
| **29** | Ex 7 | N | 6.2 | | | | |
| **30** | Ex 8 | P | 4.9 | 684700/2.31 | 97.3 | ND | 1.9 |
| **31** | Ex 9 | P | 4.5 | 534700/2.50 | 97.4 | ND | 1.8 |

ND : non détecté, soit inférieur à 1,6 % molaire

La comparaison des essais 17 et 18 montre qu'avec le catalyseur témoin de formule Nd/Bd/HDiBA/CDEA synthétisé selon l'invention WO-A-02/38636 au nom des demanderesses, pré-ajouter de l'HDiBA au milieu réactionnel permet une baisse de la viscosité, et donc des masses moléculaires, du polyisoprène synthétisé.

La comparaison des essais 23 à 25 montre qu'avec un catalyseur de formule Nd/Isop/TOA/CDEA, pré-ajouter du TIBA en quantités variables au milieu de polymérisation permettent de modifier la viscosité, et donc les masses moléculaires, du polyisoprène synthétisé.

La comparaison des essais 30 et 31 montre qu'avec un catalyseur de formule Nd/Isop/TOA/CDEA, pré-ajouter de l'HDiBA au milieu réactionnel permet une baisse de la viscosité, et donc des masses moléculaires, du polyisoprène synthétisé.

Or on constate, avec les essais 27 à 29, que l'augmentation du taux de TOA pré-ajouté n'a aucun impact sur la viscosité du polyisoprène synthétisé avec un catalyseur de formule Nd/Isop/TOA/CDEA ou sur la cinétique de polymérisation.

Les catalyseurs homogènes testés ci-avant peuvent être synthétisés en discontinu ou en continu. Ils peuvent également être engagés en polymérisation discontinue ou continue de l'isoprène.

Le tableau 4 présente une polymérisation continue de l'isoprène, réalisée selon le mode opératoire décrit ci-avant, engagée avec un catalyseur de formule Nd/isop/TOA/CDEA également synthétisé en continu à 0,04 mol/L selon le mode opératoire décrit dans le document de brevet WO2007045417 A1.

*Tableau 4 : Polymérisation continue engagée avec un catalyseur continu selon l'invention*

| Essai | Notation | Référence catalyseur | Formule catalytique | Stoechiométrie | Solvant | Alkyl-Aluminiumpréajouté (μmolcm) | Concentration Nd (μmolcm) |
|---|---|---|---|---|---|---|---|
| **32** | EX 10 | Q | Nd/Isop/TOA/CDEA | 1/30/8/2,8 | pentane TiBA | (1320) | 40 |

| Essai | Notation | Référence catalyseur | Conversion après 80 minutes (%) | Viscosité inhérente (dl/g) | Mn (g/mol) / lp | % 1,4-cis | % 1,4-trans | % 3,4 |
|---|---|---|---|---|---|---|---|---|
| **32** | EX 10 | Q | 85 | 4.5 | 367700/3.17 | 97.8 | ND | 2.2 |

ND : non détecté, soit inférieur à 1,6 % molaire

**Revendications**

1. Système catalytique multi-composants constitué :

    - d'isoprène, à titre de monomère de préformation,
    - d'un sel métallique de terre rare d'un acide phosphorique organique, ou d'un sel métallique de terre rare d'un acide carboxylique ;
    - d'un solvant hydrocarboné inerte saturé ou insaturé dont la température d'ébullition est inférieure à 40°C à pression atmosphérique;
    - d'un agent d'alkylation constitué d'un trialkylaluminium de formule AlR$_3$, dans laquelle R représente un radical alkyle ayant préférentiellement de 1 à 10 atomes de carbone, choisi parmi le triméthylaluminium, le triéthylaluminium, le tri-n-propylaluminium, le triisopropylaluminium, le tri-n-butylaluminium, le tri-t-butylaluminium, le tri-n-pentylaluminium, le tri-n-hexylaluminium, le tri-n-octylaluminium, le tricyclohexylaluminium.; et
    - d'un donneur d'halogène constitué d'un halogénure d'alkylaluminium, le radical alkyle ayant préférentiellement de 1 à 8 atomes ;

    ce système catalytique comprenant le métal de terre rare selon une concentration égale ou supérieure à 0,005 mol/l.

2. Système catalytique selon la revendication 1, **caractérisé en ce que** le métal de terre rare est un lanthanide, de préférence le néodyme.

3. Système catalytique selon la revendication 1 ou 2, **caractérisé en ce que** le sel métallique de terre rare d'un acide phosphorique organique est un organophosphate d'un diester d'acide phosphorique de formule générale (R'O)(R''O)PO(OH), dans laquelle R' et R'', identiques ou différents, représentent un radical alkyle en C1-C10, saturé ou insaturé, aryle en C6-C12 ou alkylaryle en C7-C22, de préférence un radical n-butyle, isobutyle, n-pentyle, , isopentyle, 2,2-diméthylhexyle, 1-éthylhexyle, 2-éthylhexyle, tolyle.

4. Système catalytique selon la revendication 3, **caractérisé en ce que** le sel métallique de terre rare est un tris[bis(2-éthylhexyl)phosphate] de terre rare, de préférence le tris[bis(2-éthylhexyl) phosphate] de néodyme.

5. Système catalytique selon l'une quelconque des revendications 1 à 4, **caractérisé en ce que** le rapport molaire (agent d'alkylation / sel de terre rare) a une valeur allant de 3 à 30, de préférence de 4 à 15.

6. Système catalytique selon l'une quelconque des revendications 1 à 5, **caractérisé en ce qu'**il comprend le métal de terre rare selon une concentration allant de 0,010 mol/l à 0,1 mol/l.

7. Système catalytique selon l'une quelconque des revendications 1 à 6, **caractérisé en ce que** le solvant inerte hydrocarboné léger ayant au plus 5 atomes de carbone est le n-pentane.

8. Système catalytique selon l'une quelconque des revendications 1 à 7, **caractérisé en ce que** l'agent d'alkylation est le trioctyaluminium.

9. Système catalytique selon l'une quelconque des revendications 1 à 8, **caractérisé en ce que** le donneur d'halogène est un halogénure d'alkyaluminium, de préférence le chlorure de diéthylaluminium.

10. Système catalytique selon l'une quelconque des revendications 1 à 9, **caractérisé en ce que** le rapport molaire (donneur d'halogène /sel de terre rare) a une valeur allant de 2 à 3,8, de préférence de 2,5 à 3,2.

11. Procédé de préparation d'un système catalytique tel que défini dans les revendications 1 à 10, **caractérisé en ce que** ledit système catalytique est obtenu par

    - mise en contact de l'intégralité des différents constituants du système catalytique entre eux, dont l'isoprène de préformation, en une seule ou plusieurs étapes, pendant un temps donné, généralement comprise entre 0 et 120 minutes à une température allant de 10°C à 80°C, et
    - simultanément ou séquentiellement, préformation du système catalytique pendant un temps compris entre 0 et 120 minutes à une température allant de 10°C à 80°C.

12. Procédé de préparation d'un système catalytique selon la revendication 11, **caractérisé en ce qu'**il comprend une étape d'alkylation avant la mise en contact avec le donneur d'halogène.

13. Procédé de préparation d'un système catalytique selon la revendication 11 ou 12, **caractérisé en ce qu'**il est effectué en continu.

14. Procédé de synthèse de polyisoprène présentant un taux d'enchaînements 1,4-cis dans la partie isoprénique, mesuré par la méthode "NIR" décrite dans cette spécification, supérieur à 96 %, comprenant la polymérisation de l'isoprène dans un solvant hydrocarboné inerte volatil dont la température d'ébullition est inférieure à 40°C à pression atmosphérique, en continu ou en discontinu, en présence d'un système catalytique tel que défini dans l'une quelconque des revendications 1 à 10.

15. Procédé de synthèse de polyisoprène présentant un taux d'enchaînements 1,4-cis supérieur à 96 %, comprenant la polymérisation de l'isoprène en continu en présence d'un système catalytique tel que défini dans l'une quelconque des revendications 1 à 10 et de 0 % à 70% en masse de solvant hydrocarboné inerte volatil dont la température d'ébullition est inférieure à 40°C à pression atmosphérique, par rapport à la masse totale d'isoprène à polymériser et de solvant volatil, jusqu'à atteindre un taux de conversion d'au moins 60% en limite du premier tiers du volume réactionnel du réacteur de polymérisation dimensionné pour que l'écart type de la fonction de distribution de temps de séjour dans ledit réacteur soit supérieur au temps de séjour moyen divisé par $2\sqrt{3}$, le milieu de polymérisation étant agité par le mouvement continu d'au moins un mobile d'agitation autour d'un axe rotatif.

16. Procédé de synthèse selon la revendication 14 ou 15, **caractérisé en ce que** le solvant hydrocarboné inerte de polymérisation est le même que le solvant hydrocarboné inerte du système catalytique.

17. Procédé de synthèse selon l'une quelconque des revendications 14 à 16, **caractérisé en ce que** le solvant hydrocarboné inerte de polymérisation est le n-pentane.

18. Procédé de synthèse selon l'une quelconques des revendications 14 à 17, **caractérisé en ce qu'**il comprend les étapes de préparation d'un système catalytique selon la revendication 12 ou 13.

19. Procédé de synthèse selon l'une quelconques des revendication 14 à 18, **caractérisé en ce qu'**on ajoute en décalé par rapport au système catalytique utilisé pour la réaction de polymérisation de l'isoprène, en continu ou en discontinu, une quantité supplémentaire prédéterminée d'au moins un composé alkylaluminium de formules AlR3 ou HAlR2 ou R"nAlR'3-n, dans lesquelles R, R' et R" représentent un groupe alkyle saturé ou non, de 1 à 20 atomes de carbone, préférentiellement de 1 à 12 atomes de carbone, n un entier inclusivement de 1 à 3 et H représente un atome d'hydrogène, dans le réacteur de polymérisation lorsqu'on opère en discontinu ou dans l'unité industrielle de polymérisation lorsqu'elle fonctionne en continu.

20. Procédé de synthèse selon la revendication 19, **caractérisé en ce que** la quantité dudit composé alkylaluminium ajouté en décalé avant polymérisation et préalablement mis en présence avec le ou les monomère(s) à polymériser, au moins l'isoprène, varie de 10 à 5000 micromoles pour 100 g de monomère(s) à polymériser, en fonction de la quantité d'impuretés présentes dans le milieu de polymérisation, telles que des impuretés provenant de solvants de recyclage.

**Patentansprüche**

1. Mehrkomponenten-Katalysesystem, das aus den Folgenden besteht:

- Isopren als Vorformungsmonomer,
- einem Seltenerdemetallsalz einer organischen Phosphorsäure oder einem Seltenerdemetallsalz einer Carbonsäure;
- einem inerten gesättigten oder ungesättigten Kohlenwasserstofflösungsmittel mit einem Siedepunkt unter 40°C bei Atmosphärendruck;
- einem Alkylierungsmittel, bestehend aus einem Trialkylaluminium der Formel AlR$_3$, worin R einen Alkylrest mit vorzugsweise 1 bis 10 Kohlenstoffatomen darstellt, ausgewählt aus Trimethylaluminium, Triethylaluminium, Tri-n-propylaluminium, Triisopropylaluminium, Tri-n-butylaluminium, Tri-t-butylaluminium, Tri-n-pentylaluminium, Tri-n-hexylaluminium, Tri-n-octylaluminium, Tricyclohexylaluminium; und
- einem Halogendonor, der aus einem Alkylaluminiumhalogenid besteht, wobei der Alkylrest vorzugsweise 1 bis 8 Kohlenstoffatome besitzt;

wobei dieses Katalysesystem das Seltenerdemetall in einer Konzentration von gleich oder größer als 0,005 mol/l umfasst.

2. Katalysesystem nach Anspruch 1, **dadurch gekennzeichnet, dass** das Seltenerdemetall ein Lanthanid, vorzugsweise Neodym, ist.

3. Katalysesystem nach Anspruch 1 oder 2, **dadurch gekennzeichnet, dass** das Seltenerdemetallsalz einer organischen Phosphorsäure ein Organophosphat eines Phosphorsäurediesters der allgemeinen Formel (R'O)(R"O)PO(OH) ist, worin R' und R", die gleich oder verschieden sind, einen gesättigten oder ungesättigten C1-C10Alkyl-, C6-C12Aryl- oder C7-C22Alkylarylrest, vorzugsweise einen n-Butyl-, Isobutyl-, n-Pentyl-, Isopentyl-, 2,2-Dimethylhexyl-, 1-Ethylhexyl-, 2-Ethylhexyl-, Tolylrest darstellen.

4. Katalysesystem nach Anspruch 3, **dadurch gekennzeichnet, dass** das Seltenerdemetallsalz ein Seltenerde-tris[bis(2-ethylhexyl)phosphat], vorzugsweise Neodym-tris[bis(2-ethylhexyl)phosphat], ist.

5. Katalysesystem nach einem der Ansprüche 1 bis 4, **dadurch gekennzeichnet, dass** das Molverhältnis (Alkylierungsmittel/Seltenerdesalz) einen Wert von 3 bis 30, vorzugsweise von 4 bis 15 hat.

6. Katalysesystem nach einem der Ansprüche 1 bis 5, **dadurch gekennzeichnet, dass** es das Seltenerdemetall in einer Konzentration von 0,010 mol/l bis 0,1 mol/l umfasst.

7. Katalysesystem nach einem der Ansprüche 1 bis 6, **dadurch gekennzeichnet, dass** das inerte leichte Kohlenwasserstofflösungsmittel, das höchstens 5 Kohlenstoffatome besitzt, n-Pentan ist.

8. Katalysesystem nach einem der Ansprüche 1 bis 7, **dadurch gekennzeichnet, dass** das Alkylierungsmittel Trioctylaluminium ist.

9. Katalysesystem nach einem der Ansprüche 1 bis 8, **dadurch gekennzeichnet, dass** der Halogendonor ein Alkylaluminiumhalogenid, vorzugsweise Diethylaluminiumchlorid, ist.

10. Katalysesystem nach einem der Ansprüche 1 bis 9, **dadurch gekennzeichnet, dass** das Molverhältnis von (Halogendonor/Seltenerdesalz) einen Wert von 2 bis 3,8, vorzugsweise von 2,5 bis 3,2 hat.

11. Verfahren zur Herstellung eines Katalysesystems nach einem der Ansprüche 1 bis 10, **dadurch gekennzeichnet, dass** das Katalysesystem folgendermaßen erhalten wird:

- Inkontaktbringen der gesamten verschiedenen Bestandteile des Katalysesystems, einschließlich des Vorformungs-Isoprens, miteinander in einem einzigen oder mehreren Schritten während einer vorgegebenen Zeit, im Allgemeinen zwischen 0 und 120 Minuten, bei einer Temperatur von 10°C bis 80°C und
- gleichzeitige oder darauf folgende Vorformung des Katalysesystems während einer Zeit zwischen 0 und 120 Minuten bei einer Temperatur von 10°C bis 80°C.

12. Verfahren zur Herstellung eines Katalysesystems nach Anspruch 11, **dadurch gekennzeichnet, dass** es einen Alkylierungsschritt vor dem Inkontaktbringen mit dem Halogendonor umfasst.

13. Verfahren zur Herstellung eines Katalysesystems nach Anspruch 11 oder 12, **dadurch gekennzeichnet, dass** es kontinuierlich durchgeführt wird.

14. Verfahren zur Synthese von Polyisopren, das einen gemäß dem in dieser Patentbeschreibung beschriebenen "NIR"-Verfahren gemessenen Anteil an cis-1,4-Bindungen im Isopren-Anteil von mehr als 96% aufweist, umfassend die kontinuierliche oder diskontinuierliche Polymerisation des Isoprens in einem flüchtigen inerten Kohlenwasserstofflösungsmittel, das einen Siedepunkt unter 40°C bei Atmosphärendruck besitzt, in Gegenwart eines Katalysesystems nach einem der Ansprüche 1 bis 10.

15. Verfahren zur Synthese von Polyisopren mit einem Anteil an cis-1,4-Bindungen von mehr als 96%, umfassend die kontinuierliche Polymerisation des Isoprens in Gegenwart eines Katalysesystems nach einem der Ansprüche 1 bis 10 und von 0 bis 70 Massen-% an flüchtigem inertem Kohlenwasserstofflösungsmittel mit einem Siedepunkt unter 40°C bei Atmosphärendruck, bezogen auf die Gesamtmasse an zu polymerisierendem Isopren und flüchtigem Lösungsmittel, bis ein Umwandlungsgrad von mindestens 60% an der Grenze des ersten Drittels des Reaktionsvolumens des Polymerisationsreaktors erreicht wird, der so bemessen ist, dass die Standardabweichung der Verweilzeit-Verteilungsfunktion in dem Reaktor größer ist als die mittlere Verweilzeit, dividiert durch $2\sqrt{3}$, wobei das Polymerisationsmedium durch die kontinuierliche Bewegung mindestens einer Rührvorrichtung um eine Rotationsachse gerührt wird.

16. Syntheseverfahren nach Anspruch 14 oder 15, **dadurch gekennzeichnet, dass** das inerte Kohlenwasserstofflösungsmittel bei der Polymerisation das gleiche ist wie das inerte Kohlenwasserstofflösungsmittel des Katalysesystems.

17. Syntheseverfahren nach einem der Ansprüche 14 bis 16, **dadurch gekennzeichnet, dass** das inerte Kohlenwasserstofflösungsmittel bei der Polymerisation n-Pentan ist.

18. Syntheseverfahren nach einem der Ansprüche 14 bis 17, **dadurch gekennzeichnet, dass** es die Schritte der Herstellung eines Katalysesystems nach Anspruch 12 oder 13 umfasst.

19. Syntheseverfahren nach einem der Ansprüche 14 bis 18, **dadurch gekennzeichnet, dass** man versetzt, bezogen auf das für die kontinuierliche oder diskontinuierliche Polymerisationsreaktion des Isoprens verwendete Katalysesystem, eine vorgegebene zusätzliche Menge mindestens einer Alkylaluminiumverbindung der Formeln AlR3 oder HAlR2 oder R"nAlR'3-n, worin R, R' und R" eine gesättigte oder ungesättigte Alkylgruppe mit 1 bis 20 Kohlenstoffatomen, vorzugsweise 1 bis 12 Kohlenstoffatomen darstellen, n eine ganze Zahl, einschließlich 1 bis 3, darstellt und H ein Wasserstoffatom darstellt, in den Polymerisationsreaktor, wenn man diskontinuierlich arbeitet, oder in die industrielle Polymerisationsanlage, wenn sie im kontinuierlichen Betrieb arbeitet, zugibt.

20. Syntheseverfahren nach Anspruch 19, **dadurch gekennzeichnet, dass** die Menge der Alkylaluminiumverbindung, die versetzt vor der Polymerisation zugegeben und zuvor mit dem oder den zu polymerisierenden Monomer(en), mindestens dem Isopren, zusammengebracht wird, von 10 bis 5000 Mikromol pro 100 g zu polymerisierende(m/n) Monomer(en) in Abhängigkeit von der Menge an Verunreinigungen, die im Polymerisationsmedium vorhanden sind, wie Verunreinigungen, die von Recyclinglösungsmitteln herrühren, variiert.

**Claims**

1. Multicomponent catalytic system consisting:

    - of isoprene, as preforming monomer,
    - of a rare earth metal salt of an organic phosphoric acid, or on a rare earth metal salt of a carboxylic acid;
    - of a saturated or unsaturated inert hydrocarbon solvent, the boiling point of which is below 40°C at atmospheric pressure;
    - of an alkylating agent consisting of a trialkylaluminium of formula $AlR_3$, in which R represents an alkyl radical preferably having from 1 to 10 carbon atoms, selected from trimethylaluminium, triethylaluminium, tri-n-propylaluminium, triisopropylaluminium, tri-n-butylaluminium, tri-t-butylaluminium, tri-n-pentylaluminium, tri-n-hexylaluminium, tri-n-octylaluminium, tricyclohexylaluminium; and
    - of a halogen donor consisting of an alkylaluminium halide, the alkyl radical preferably having from 1 to 8 atoms;

    this catalytic system comprising the rare earth metal in a concentration greater than or equal to 0.005 mol/l.

2. Catalytic system according to Claim 1, **characterized in that** the rare earth metal is a lanthanide, preferably neodymium.

3. Catalytic system according to Claim 1 or 2, **characterized in that** the rare earth metal salt of an organic phosphoric acid is an organophosphate of a phosphoric acid diester of general formula (R'O)(R"O)PO(OH), in which R' and R", which are identical or different, represent a saturated or unsaturated $C_1$-$C_{10}$ alkyl radical, a $C_6$-$C_{12}$ aryl radical or a $C_7$-$C_{22}$ alkylaryl radical, preferably an n-butyl, isobutyl, n-pentyl, isopentyl, 2,2-dimethylhexyl, 1-ethylhexyl, 2-ethylhexyl or tolyl radical.

4. Catalytic system according to Claim 3, **characterized in that** the rare earth metal salt is a rare earth tris[bis(2-ethylhexyl)phosphate], preferably neodymium tris[bis(2-ethylhexyl)phosphate].

5. Catalytic system according to any one of Claims 1 to 4, **characterized in that** the (alkylating agent/rare earth salt) molar ratio has a value ranging from 3 to 30, preferably from 4 to 15.

6. Catalytic system according to any one of Claims 1 to 5, **characterized in that** it comprises the rare earth metal in a concentration ranging from 0.010 mol/l to 0.1 mol/l.

7. Catalytic system according to any one of Claims 1 to 6, **characterized in that** the light hydrocarbon inert solvent having at most 5 carbon atoms is n-pentane.

8. Catalytic system according to any one of Claims 1 to 7, **characterized in that** the alkylating agent is trioctylaluminium.

9. Catalytic system according to any one of Claims 1 to 8, **characterized in that** the halogen donor is an alkylaluminium halide, preferably diethylaluminium chloride.

10. Catalytic system according to any one of Claims 1 to 9, **characterized in that** the (halogen donor/rare earth salt) molar ratio has a value ranging from 2 to 3.8, preferably from 2.5 to 3.2.

11. Process for preparing a catalytic system as defined in Claims 1 to 10, **characterized in that** said catalytic system is obtained by:

- bringing all of the various constituents of the catalytic system into contact with one another, including the preforming isoprene, in one or more steps, for a given time, generally of between 0 and 120 minutes at a temperature ranging from 10°C to 80°C, and
- simultaneously or sequentially, preforming the catalytic system for a time of between 0 and 120 minutes at a temperature ranging from 10°C to 80°C.

12. Process for preparing a catalytic system according to Claim 11, **characterized in that** it comprises an alkylation step before being brought into contact with the halogen donor.

13. Process for preparing a catalytic system according to Claim 11 or 12, **characterized in that** it is carried out continuously.

14. Process for synthesizing polyisoprene having a content of cis-1,4 linkages in the isoprene part, measured by the "NIR" method described in this specification, of greater than 96%, comprising the polymerization of isoprene in a volatile inert hydrocarbon solvent, the boiling point of which is below 40°C at atmospheric pressure, continuously or batchwise, in the presence of a catalytic system as defined in any one of Claims 1 to 10.

15. Process for synthesizing polyisoprene having a content of cis-1,4 linkages of greater than 96%, comprising the polymerization of isoprene continuously in the presence of a catalytic system as defined in any one of Claims 1 to 10 and of 0% to 70% by weight of volatile inert hydrocarbon solvent, the boiling point of which is below 40°C at atmospheric pressure, with respect to the total weight of isoprene to be polymerized and of volatile solvent, until a degree of conversion of at least 60% is achieved at the limit of the first third of the reaction volume of the polymerization reactor sized so that the standard deviation of the residence time distribution function in said reactor is greater than the mean residence time divided by $2\sqrt{3}$, the polymerization medium being stirred by the continuous movement of at least one stirrer about a rotary axis.

16. Synthesis process according to Claim 14 or 15, **characterized in that** the polymerization inert hydrocarbon solvent is the same as the inert hydrocarbon solvent of the catalytic system.

17. Synthesis process according to any one of Claims 14 to 16, **characterized in that** the polymerization inert hydrocarbon solvent is n-pentane.

18. Synthesis process according to any one of Claims 14 to 17, **characterized in that** it comprises steps of preparing a catalytic system according to Claim 12 or 13.

19. Synthesis process according to any one of Claims 14 to 18, **characterized in that** a predetermined supplementary amount of at least one alkylaluminium compound of formula $AlR_3$ or $HAlR_2$ or $R''_nAlR'_{3-n}$, in which R, R' and R'' represent a saturated or unsaturated alkyl group having from 1 to 20 carbon atoms, preferably from 1 to 12 carbon atoms, n is an integer inclusively from 1 to 3 and H represents a hydrogen atom, is added, in a staggered manner with respect to the catalytic system used for the continuous or batchwise isoprene polymerization reaction, to the polymerization reactor when operating batchwise or to the industrial polymerization unit when it operates continuously.

20. Synthesis process according to Claim 19, **characterized in that** the amount of said alkylaluminium compound added in a staggered manner before polymerization and previously brought into contact with the monomer(s) to be polymerized, at least isoprene, varies from 10 to 5000 micromoles per 100 g of monomer(s) to be polymerized, as a function of the amount of impurities present in the polymerization medium, such as impurities originating from recycled solvents.

# Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0238635 A
- WO 0238636 A
- WO 03097708 A
- WO 0248218 A1
- WO 2006133757 A1
- WO 2007045417 A1
- US 2003187162 A
- GB 2101616 A

- WO 2009083480 A1
- WO 10133608 A
- WO 2007045417 A
- WO 2006133757 A
- EP 1845118 A
- WO 10069511 A
- WO 10069805 A
- WO 2003097708 A

**Littérature non-brevet citée dans la description**

- Génie de la réaction chimique : conception et fonctionnement des réacteurs. **JACQUES VILLER-MAUX.** TEC & DOC - LAVOISIER. 1993, 170-172
- Mixing of Highly Viscous Fluids, Polymers, and Pastes. **DAVID B. TODD.** Handbook of Industrial Mixing: Science and Practice. John Wiley and Sons, 2004, 998, , 1021

- **P. GELADI ; B. R. KOWALSKI.** Partial Least Squares régression : a tutorial. *Analytica Chimica Acta,* 1986, vol. 185, 1-17
- **M. TENENHAUS.** La régression PLS - Théorie et pratique. *Editions Technip,* 1998
- Génie de la réaction chimique : conception et fonctionnement des réacteurs. TEC & DOC - LAVOISIER. 1993, 170-172